Europäisches Patentamt

**European Patent Office**

Office européen des brevets

(11) Publication number: **0 363 508 B1**

## EUROPEAN PATENT SPECIFICATION

(45) Date of publication of patent specification: **25.03.92**    (51) Int. Cl.⁵: **B09B 1/00**, E21B 43/00

(21) Application number: **88116891.8**

(22) Date of filing: **12.10.88**

(54) **A method of controlling the flow of landfill gas from sanitary landfills and apparatus for performing the method.**

(43) Date of publication of application:
**18.04.90 Bulletin 90/16**

(45) Publication of the grant of the patent:
**25.03.92 Bulletin 92/13**

(84) Designated Contracting States:
**AT CH DE FR GB LI NL SE**

(56) References cited:
**EP-A- 0 182 143**
**EP-A- 0 251 872**
**GB-A- 2 036 384**
**US-A- 3 913 398**

**MÜLL UND ABFALL, vol. 20, no. 3, March 1988, pages 112-122, Berlin, DE; F.W. BOLL et al.: "Auswirkungen der aktiven Entgasung auf die Möglichkeiten der Rekultivierung von Hochdeponien"**

**J. CHEM. TECH. BIOTECHNOL., vol. 30, 1980, pages 458-465, Society of Chemical Industry, Oxford, GB; J.F. REES: "Optimisation of methane production and refuse decomposition in landfills by temperature control"**

(73) Proprietor: **RAGN-SELLSFÖRETAGEN AB**
**Sveavägen 124**
**S-113 50 Stockholm(SE)**

(72) Inventor: **Hall, Lars**
**Tranbärsvägen 5**
**S-181 64 Lidingö(SE)**

(74) Representative: **Swenson, Raymond et al**
**c/o RAYMOND SWENSON PATENTBYRA AB**
**Sankt Eriksterrassen 72A**
**S-112 34 Stockholm(SE)**

Rank Xerox (UK) Business Services

## Description

The present invention concerns a method of controlling the recovery of landfill gas from a sanitary landfill by measuring the temperature of the gas and by adapting the gas withdrawal thereby as well as apparatus for performing the method.

In a landfill of domestic refuse and specific types of industrial waste, so-called landfill gas is formed after some time in consequence of the decomposition of the organic contents of the refuse. The landfill gas commonly consists of 50-60% methane, about 40% of carbon dioxide and 2-10% of nitrogen. The landfill gas is formed under anaerobic conditions, i.e. absence of air.

The anaerobic decomposition of the organic material in the waste to landfill gas is a slightly exothermic process, i.e. a very small quantity of heat is developed. If oxygen is supplied to the refuse, for example by penetration of air, an aerobic decomposition of the organic material to mainly carbon dioxide and water occurs. This aerobic process is highly exothermic, i.e. large quantities of heat are developed in connection with the decomposition process.

Landfill gas is generally recovered from a sanitary landfill by perforated tubes being urged downwardly from the surface into the landfill. In order to prevent air from mixing with the landfill gas the upper 2-4 metres of the tube must not have perforations. The gas is commonly supplied from such type of a so-called gas well through a conduit to a control chamber. In this chamber the gas conduit coming from the gas well is provided with a valve for controlling the gas flow and a gas stoplet for analysis samples. Gas conduits are connected to a control chamber of this type from a plurality of gas wells, normally 2-6 of such wells. These conduits are thereafter combined in the control chamber so as to form a manifold through which the gas is drawn to a fan or a compressor. This equipment then urges the gas on to the place of utilization which may be a furnace or boiler, a gas engine, etc.

The gas well and the conduit system are subjected to negative pressure up to the fan. If the quantity of gas which is withdrawn from the gas well is greater than the quantity of gas which is formed in the sanitary landfill around the gas well, air will be drawn into the landfill. The decomposition process in the landfill will then partly be aerobic, which i.a. causes the methane content of the gas to decrease and the nitrogen content of the gas to increase. The oxygen content normally only increases slightly, as the major part of the oxygen included in the air being drawn in will be consumed in the aerobic decomposition process in the refuse. As has been mentioned earlier a substantial amount of heat is developed in the aerobic decomposition process, and in drawing in air into the sanitary landfill the temperature of the recovered gas will consequently increase.

In order to achieve high economy in recovering gas from the sanitary landfill, there is a desire to withdraw as much gas as possible from each gas well without incurring the risk of having air drawn into the landfill. Up to now this problem has been solved by regularly checking the methane content of each gas well. As this check normally is carried out at intervals of 4-6 weeks, it becomes very demanding in terms of work and is also expensive. As the result of the lengthy intervals between the tests, air may be drawn into the landfill during a relatively long period before this is discovered. A gas having a low methane content will then be the result, but the greatest danger is that the anaerobic decomposition process is slowed down, and it may take a long time to make this operate satisfactorily again.

On the market there are automatic gas analyzers which can be interconnected to each gas well via gas conduits and can analyze outgoing gas continuously. Equipment of this type is described in European Patent EP 0 182 143, according to which landfill gas is drawn from each gas well to an automatic gas analyzer in which the content of gas of any one of the components $O_2$, $N_2$, $CO_2$ or $CH_4$ is determined. This measured value will then control the withdrawal of gas from the respective gas well. A control system of this type is of course extremely expensive to set up, and furthermore it requires qualified maintenance of specific system components.

Another way of avoiding having air drawn into the sanitary landfill is described in German Patent Specification DE 27 19 889. According to this publication the pressure inside the sanitary landfill is measured at different gas withdrawal flows before the landfill gas system is set into routine production. That flow is then determined at which the pressure in the landfill in the immediate vicinity of the gas well is the same as the atmospheric pressure. This is the maximum permissible gas withdrawal. After the system has been put into routine production this maximum gas withdrawal must not be exceeded.

The manner of achieving the greatest possible quantity of gas from refuse is described in J. Chem. Tech. Biotechnol., 1980, Volume 30, pages 458-465, wherein the microbiological conditions for anaerobic decomposition with mesophilic microorganisms are described. The author thereafter explains how the moisture content and the temperature affect the reaction rate and finally which external changes can be carried out in the form of insulating the landfill and increasing the moisture content of the refuse so as to improve the gas production.

The purpose of this invention is to find an inexpensive method of obtaining information, when the gas system is in operation, on whether too much landfill gas is withdrawn from a gas well, i.e. if air is drawn into the landfill at the gas well, and to disclose apparatus for performing this method. The desired result is attained in such manner that the strong development of heat which occurs when air is supplied to the refuse is utilized as an indicator. In this aerobic process the exhaust gas will become considerably warmer than in the anaerobic decomposition process. If the temperature of the gas from each gas well is measured, it is easy to discover whether or not air has been drawn into the refuse at the well.

More specifically the invention concerns a method of controlling the flow of landfill gas from sanitary landfills for domestic refuse and industrial waste, said method being characterised in that landfill gas is drawn out of gas wells, that the temperature of the gas withdrawn for each gas well is measured and that a temperature increase is utilized as an indication of too much landfill gas being withdrawn from the well, i.e. that air has been drawn into the sanitary landfill at the gas well, and that this information is utilized for controlling the flow of gas. The temperature is preferably measured by a temperature meter being disposed in the flow of gas in each gas well. The temperature can be read regularly at each gas well, for example once a week. The measured values from the various temperature meters can also be transferred to a central location by means of a cable or in other manner either continuously or at desired time intervals, and the measured values transferred to said central location can be recorded. Furthermore, the measured values of the temperature meter can be utilized for manual or automatic control of the flow of gas from the gas well, and in addition an increased temperature can automatically give an alarm, for example acoustically or optically.

The invention also concerns apparatus for performing the above-mentioned method, said apparatus comprising a control chamber being interconnected to one or more gas wells and being connected to a gas furnace over a gas fan. A temperature meter is located in the gas well and is connected for example to a microprocessor which is connected to a control valve located in the control chamber. The microprocessor and adjustment valve are disposed to decrease the flow of withdrawn landfill gas on the basis of a temperature increase indicated by the temperature meter.

For practical purposes the relevant method and apparatus may generally be designed such, that each gas well is provided with a temperature meter which senses the temperature of the withdrawn gas. Information on the temperature of the gas can be collected, for example by an attendant visiting each gas well and making a notation of the temperature there or by the measured value being transferred to a central location by means of a cable either continuously or at short time intervals, with all of the temperature measurements being recorded at said central location, for example, by means of a printer or a microprocessor. The equipment may also be provided with an alarm function so that an increased temperature provides some kind of an alarm, for example acoustical, optical, etc.

The measured values of the temperature meters are used for controlling the gas flow from the gas well, for example by manual adjustment of a valve or by means of automatic control of the flow of gas with traditional control equipment.

As measuring the temperature and transferring and recording the measured value are carried out with simple and inexpensive components, a system of this type for continuously monitoring gas wells can be achieved at very low cost. As the utilized system components are well-proven standard components, the monitoring system will be lent a high degree of reliability.

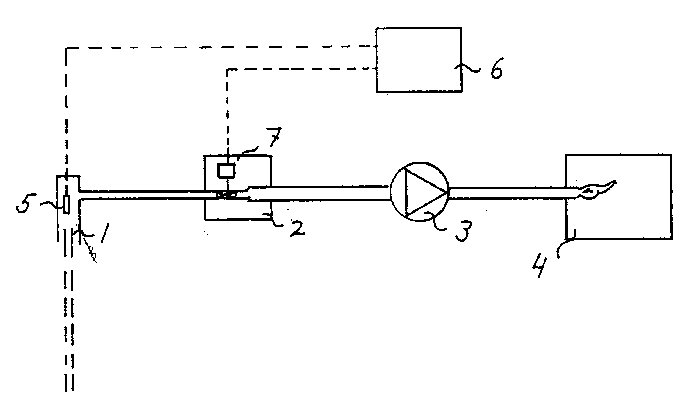

The accompanying figure shows apparatus for performing the mentioned method. It is pointed out that the apparatus may be designed in a plurality of different ways and that the illustrated apparatus solely comprises an example.

In the Figure the designation 1 refers to a gas well which is connected to a control chamber 2, to which is connected a gas fan 3 having the purpose of via the control chamber 2 passing gas withdrawn from the gas well to a gas furnace 4 in which the gas is utilized for generating heat by combustion. The designation 5 refers to an appropriate temperature meter, and 6 is a microprocessor for recording, controlling and adjusting. In the control chamber 2 there is included an adjusting valve 7 for controlling the flow of gas, for example decreasing the flow of withdrawn landfill gas when the temperature of the gas increases.

For recovering landfill gas from sanitary landfills large cement tubes filled with macadam or gravel are sometimes used instead of perforated tubes. Horizontal perforated tube conduits or large domes which have been dug down into the surface of the landfill can also be utilized for recovering landfill gas. Temperature measuring can also in these cases be utilized as an indicator of drawing in air into the refuse.

**Claims**

**1.** A method of controlling the flow of landfill gas from sanitary landfills for domestic refuse and industrial waste, said method being **characterised** in that landfill gas is drawn out of gas wells, that the temperature of the gas withdrawn from each gas well is measured, and that a temperature increase is utilized as an indication of too much landfill gas being withdrawn from the well, i.e. that air has been drawn into the sanitary landfill at the gas well, and that this information is utilized for controlling the flow of gas.

2. A method in accordance with Claim 1, **characterised** in that the temperature is measured by a temperature meter being disposed in the flow of gas from each gas well.

3. A method in accordance with Claim 2, **characterised** in that the temperature meter is read regularly at each gas well, for example once a week.

4. A method in accordance with Claim 2, **characterised** in that the measured values from the various temperature meters are transferred to a central location by means of a cable or in other manner continuously or at desired time intervals.

5. A method in accordance with Claim 4, **characterised** in that the measured values transferred to the central location are recorded.

6. A method in accordance with Claim 2, **characterised** in that the measured values from the temperature meter are used for manually or automatically controlling the flow of gas from the gas well.

7. A method in accordance with Claim 4, **characterised** in that an increased temperature automatically gives an alarm, for example acoustically or optically.

8. A method in accordance with Claim 1, **characterised** in that the method is utilized also for other types of gas recovery from sanitary landfills, for example cement ring wells, horizontal tube conduits and gas collecting domes.

9. Apparatus for performing the method in accordance with any one of Claims 1-8, **characterised** in that it comprises a control chamber (2) for controlling the flow of landfill gas from sanitary landfills for domestic refuse and industrial waste, said control chamber (2) being connected to one or more gas wells (1), that the control chamber is connected to a gas furnace (4) over a gas fan (3), and in that a temperature meter (5) is located in the gas well and is connected for example to a microprocessor (6) which is connected to an adjustment valve (7) located in the control chamber (2), said microprocessor and adjustment valve being disposed to decrease the flow of withdrawn landfill gas on the basis of a temperature increase indicated by the temperature meter (5).

**Revendications**

1. Procédé pour le réglage de l'évacuation de biogaz des décharges d'ordures domestiques et industrielles, caractérisé en ce que le biogaz est retiré de sources de gaz, que la température du gaz retiré de chaque source est mesurée et qu'une augmentation de la température est utilisée comme une indication d'une évacuation trop grande de biogaz d'une source, c-à-d. que de l'air a été aspiré dans la décharge d'ordures à l'endroit de la source de gaz, et que cette information est utilisée pour régler l'évacuation de gaz.

2. Procédé selon la revendication 1, caractérisé en ce que la température est mesurée à l'aide d'un appareil de mesure de température disposé dans le flux de gaz de chaque source de gaz.

3. Procédé selon la revendication 2, caractérisé en ce que le dispositif de mesure de température est lu régulièrement à chaque source de gaz, p.ex. une fois par semaine.

4. Procédé selon la revendication 2, caractérisé en ce que les valeurs mesurées par les différents dispositifs de mesure de température sont transférées vers un endroit central au moyen d'un câble ou d'une autre manière, de façon continue ou avec des intervalles de temps désirés.

5. Procédé selon la revendication 4, caractérisé en ce que les valeurs mesurées transférées à l'endroit central sont enregistrées.

6. Procédé selon la revendication 2, caractérisé en ce que les valeurs mesurées par l'appareil de mesure de température sont utilisées pour la commande manuelle ou automatique de l'évacuation de gaz de la source de gaz.

7. Procédé selon la revendication 4, caractérisé en ce qu'une augmentation de température donne automatiquement un alarme, p.ex. acoustique ou optique.

8. Procédé selon la revendication 1, caractérisé en ce que la méthode est utilisée également pour d'autres types de récupération de gaz de décharge d'ordures, p.ex. des sources annulaires en ciment, des conduites horizontales ou des coupoles collectrices de gaz.

9. Appareil pour la mise en oeuvre du procédé selon l'une quelconque des revendications 1 à 8, caractérisé en ce qu'il comprend une chambre de réglage (2) pour régler l'évacuation de biogaz de la décharge d'ordures domestiques et industrielles, ladite chambre de commande (2) étant connectée à une ou plusieurs sources de gaz (1), que la chambre de réglage est connectée à un four à gaz (4) au moyen d'un ventilateur de gaz (3), et qu'un appareil de mesure de température (5) est disposé dans une source de gaz et connecté p. ex. à un microprocesseur (6) qui est connecté à une soupape de réglage (7) se trouvant dans la chambre de réglage (2), le microprocesseur et la soupape de réglage étant conçus pour réduire le flux de biogaz retiré sur la base d'une augmentation de température indiquée par le dispositif de mesure de température (5).

**Patentansprüche**

1. Verfahren zur Steuerung des Deponiegasabzuges aus Deponien für Haushalts- und Industriemüll, dadurch gekennzeichnet, dass das Deponiegas aus Gasquellen herausgezogen wird, dass die Temperatur des aus jeder Gasquelle herausgezogenen Gases gemessen wird und, dass ein Temperaturanstieg als eine Anzeige für zuviel aus der Quelle abgezogenes Deponiegases benutzt wird, das heisst, dass Luft bei der Gasquelle in die Mülldeponie hereingezogen worden ist, und, dass diese Information zur Steuerung des Gasabzuges benutzt wird.

2. Verfahren nach Anspruch 1, dadurch gekennzeichnet, dass die Temperatur mit einem Temperaturmessgerät gemessen wird, welches in den Gasstrom aus jeder Gasquelle angeordnet ist.

3. Verfahren nach Anspruch 2, dadurch gekennzeichnet, dass das Temperaturmessgerät bei jeder Gasquelle regelmässig, z.B. ein Mal pro Woche, abgelesen wird.

4. Verfahren nach Anspruch 2, dadurch gekennzeichnet, dass die mit den verschiedenen Temperaturmessgeräten gemessenene Werte mit Hilfe eines Kabels oder in anderer Weise an einen zentralen Ort kontinuierlich oder in gewünschten Zeitintervallen übertragen werden.

5. Verfahren nach Anspruch 4, dadurch gekennzeichnet, dass die an den zentralen Ort übertragenen gemessenen Werte aufgezeichnet werden.

6. Verfahren nach Anspruch 2, dadurch gekennzeichnet, dass die gemessenen Werte des Temperaturmessgerätes dazu benutzt werden, den Gasabzug aus der Gasquelle von Hand oder automatisch zu steuern.

7. Verfahren nach Anspruch 4, dadurch gekennzeichnet, dass ein Temperaturanstieg automatisch einen Alarm, z.B. einen akustischen oder optischen Alarm, auslöst.

8. Verfahren nach Anspruch 1, dadurch gekennzeichnet, dass das Verfahren auch für andere Gasrückgewinnungsarten aus Mülldeponien, z.B. Zementringquellen, horizontale Rohrleitungen oder Sammelkuppeln, benutzt wird.

9. Vorrichtung zum Durchführen des Verfahrens nach einem der Ansprüche 1 bis 8, dadurch gekennzeichnet, dass sie eine Steuerkammer (2) zum Steuern des Deponiegasabzuges aus Deponien für Haushalts- und Industriemüll aufweist, wobei die Steuerkammer (2) an eine oder mehrere Gasquellen (1) angeschlossen ist, dass die Steuerkammer über ein Gasgebläse (3) an einen Gasofen (4) angeschlossen ist, und, dass ein Temperaturmessgerät in der Gasquelle angeordnet und z.B. mit einem Mikroprozessor (6) verbunden ist, welcher an ein in der Steuerkammer (2) angeordnetes Einstellventil (7) angeschlossen ist, wobei der Mikroprozessor und das Einstellventil vorgesehen sind, um den Deponiegasabzug auf Grund eines vom Temperaturmessgerät (5) angezeigten Temperaturanstieges zu verringern.